# EUROPÄISCHE PATENTSCHRIFT

(11) **EP 2 066 006 B1**
(45) Veröffentlichungstag und Bekanntmachung des Hinweises auf die Patenterteilung: **19.04.2017**
(21) Anmeldenummer: 08105678.0
(22) Anmeldetag: 28.10.2008
(51) Int. Cl.: H02K 3/02, H02K 3/50

(54) **Elektrische Maschine**
Electric machine
Machine électrique

(30) Priorität: 30.11.2007 DE 102007058911
(43) Veröffentlichungstag der Anmeldung: 03.06.2009
(73) Patentinhaber: Robert Bosch GmbH, 70442 Stuttgart (DE)
(72) Erfinder: Schustek, Siegfried, 71254, Ditzingen (DE); Knorr, Torsten, 71665, Vaihingen/Enz (DE)

(56) Entgegenhaltungen:
- WO-A1-88/06356
- DE-C- 681 283
- FR-A1- 2 555 084
- JP-A- 57 009 242
- JP-A- 2004 207 172
- US-A- 4 315 175

## Beschreibung

### Stand der Technik

Die Erfindung geht aus von einer elektrischen Maschine nach der Gattung des unabhängigen Anspruchs.

Aus dem DE-GBM 74 40 605 ist bereits eine elektrische Maschine bekannt, deren Stator und/oder Rotor Wicklungen aus Aluminium aufweist, welche aufgrund der geringeren Materialkosten gegenüber Kupfer preiswerter herstellbar sind und ein geringeres Gewicht besitzen. Die maximal erzielbare Leistung verringert sich dabei zwar reziprok zu den spezifischen Widerständen von Aluminium und Kupfer, was jedoch durch einen größeren Leiterquerschnitt ohne Gewichtserhöhung und bei nur geringfügiger Erhöhung der Baugröße ausgeglichen werden kann. Die Einsatzmöglichkeiten von Motorwicklungen aus Aluminium liegen dabei insbesondere bei Maschinen kleinerer Leistung.

Eine Schwierigkeit bei der Verwendung von Aluminium für Motorwicklungen besteht jedoch darin, dass die Enden der Wicklung mit anderen stromführenden Teilen der Maschine verbunden werden müssen, welche aus Kupfer bestehen. Diese Kontaktstellen zwischen Kupfer und Aluminium sind aufgrund der unterschiedlichen Standardpotentiale der beiden Materialien korrosionsgefährdet. Dies gilt in besonderem Maße für derartige Verbindungen von Kupfer und Aluminium, welche erhöhter Korrosionsgefahr ausgesetzt sind, beispielsweise durch Feuchtigkeit- und/oder Wärmeeinwirkung im Bereich der Kontaktstellen. Ein derart erhöhtes Korrosionspotential liegt vor bei elektrischen Maschinen, welche im Motorraum von Kraftfahrzeugen eingesetzt werden, wie dies beispielsweise bei Startern für Brennkraftmaschinen der Fall ist, so dass hier zusätzliche Maßnahmen zur Verringerung der Korrosion getroffen werden müssen.

Zur Reduzierung der Korrosionsprobleme und zur Verringerung des elektrischen Übergangswiderstandes an der Verbindungsstelle von Aluminiumleitern einer Wicklung zu den Kupferlamellen des Kommutators einer elektrischen Maschine ist in der JP-06253507 A bereits vorgeschlagen worden, auf den Schweißbereich des Kommutators eine Zwischenschicht aus einem weichen, elektrisch leitfähigen Material aufzubringen, welches in seiner Verarbeitbarkeit zwischen derjenigen von Kupfer und Aluminium liegt und für Ultraschallschweißungen geeignet ist. Durch eine derartige Zwischenschicht soll das Kontaktierungsproblem beim Verbinden der Metalle Kupfer und Aluminium behoben werden. Die Korrosionsgefahr an der Verbindungsstelle ist hierbei jedoch nicht berücksichtigt.

Eine vergleichbar unbefriedigende Lösung zur Kontaktierung von Kupfer- und Aluminiummaterialien ist auch aus der FR-PS 978 953 bekannt, in welcher vorgeschlagen wird, die mit den Kupferlamellen eines Kommutators zu verbindenden Leiterenden einer Aluminiumwicklung in Schlitze des Kommutators einzupressen und durch Verstemmen des Kupfermaterials des Kommutators zu arretieren und zu kontaktieren. Durch diese Maßnahmen erreicht man zwar eine Verbesserung der Kontaktierung und eine Verringerung der Korrosionsgefahr gegenüber einer oberflächlichen Verbindung der Aluminiumleiter mit dem Kommutator, die Korrosionsprobleme bleiben im Prinzip jedoch bestehen, da die Oberfläche des Kommutators nicht durch eine Schutzschicht oder dergleichen abgedeckt werden kann.

Aus dem Dokument JP 57-9242 ist eine Verbindungsstelle aus Aluminiumleitern im Rotor und einem Leitungsabschnitt aus Kupfer bekannt. WO 88/06356 A1 offenbart an einer ähnlichen Verbindungsstelle ein elektrisch isolierendes Harz.

### Offenbarung der Erfindung

Die erfindungsgemäße elektrische Maschine mit den Merkmalen des unabhängigen Anspruchs hat demgegenüber den Vorteil, dass gleiche Materialien an den Enden der Wicklungsleiter und der mit ihnen elektrisch und mechanisch zu verbindenden stromführenden Teile der Maschine vorliegen, so dass die geschilderten Korrosions- und Kontaktierungsprobleme überhaupt nicht auftreten. Die kritische Kontaktstelle am Ende der Aluminiumleiter wird von der Verbindungsstelle am Kommutator, wegverlegt in einen Bereich, wo ein dauerhafter und sicherer Korrosionsschutz ohne Beeinträchtigung der elektrischen Verbindung aufgebracht werden kann.

Besonders vorteilhaft ist es, wenn ein Leitungsabschnitt aus Kupfer am Ende des Aluminiumleiters als Kontakthülse gestaltet ist, in welche das abisolierte Ende des Aluminiumleiters eingesteckt und darin formschlüssig und/oder kraftschlüssig befestigt und kontaktiert wird. Die Länge dieses Leitungsabschnittes aus Kupfer ist derart zu bemessen, dass notwendige Biegungen am Ende des Leiters außerhalb der Verbindungszone im Bereich des Leitungsabschnittes aus Kupfer durchgeführt werden können und die Verbindung mit der Kommutatorlamelle, welche vorzugsweise durch Schweißen erfolgt, im Bereich des Leitungsabschnittes aus Kupfer liegt. So ergibt sich in diesem korrosionsgefährdeten Bereich eine reine Kupfer-Kupferverbindung, welche die aufgezeigten Schwierigkeiten vermeidet.

Ein erstes zweckmäßiges Verfahren zum Verbinden der Enden der Aluminiumleiter mit den Leitungsabschnitten aus Kupfer besteht darin, die beiden Enden miteinander zu verschweißen. Ein anderes vorteilhaftes Verfahren zum Verbinden dieser beiden Enden besteht in der Anwendung einer Crimpverbindung, welche hinsichtlich des Fertigungsaufwandes vorteilhafter sein kann. In beiden Fällen ist es dabei möglich, die kritische Verbindungsstelle zwischen den unterschiedlichen Materialien Aluminium und Kupfer von der eigentlichen Kontaktierungsstelle in der elektrischen Maschine, insbesondere vom Kommutator der Maschine, weg zu verlegen und die Verbindungsstelle durch eine elektrisch isolierende Ummantelung gegen Korrosion sicher zu schützen.

Weitere vorteilhafte Einzelheiten der Erfindung ergeben sich aus den Unteransprüchen und aus der Beschreibung eines Ausführungsbeispiels.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Figur 1: einen Längsschnitt einer elektrischen Maschine in der Ausführung als Starter für eine Brennkraftmaschine,
- Figur 2: einen schematisierten Längsschnitt eines nicht beanspruchten Ausführungsbeispiels der Verbindungsstelle zwischen dem Ende eines Aluminiumleiters einer Wicklung und einem Leitungsabschnitt aus Kupfer in Form einer aufgesteckten Hülse und
- Figur 3: eine schematisierte Darstellung des erfindungsgemäßen Anschlusses eines 10 Aluminiumleiters einer Rotorwicklung an die Lamellen des Kommutators einer elektrischen Maschine.

### Ausführungsform der Erfindung

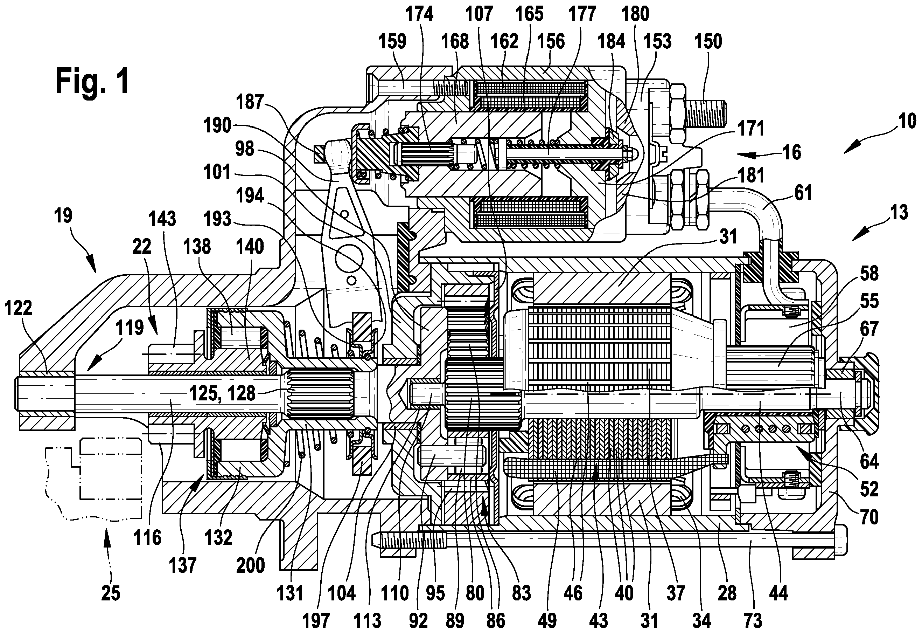

In der Figur 1 ist eine Startvorrichtung 10 dargestellt. Diese weist einen Startermotor 13 und ein Einrückrelais 16 auf. Der Startermotor 13 und das Einrückrelais 16 sind an einem gemeinsamen Antriebslagerschild 19 befestigt. Der Startermotor 13 dient funktionell dazu, ein Andrehritzel 22 anzutreiben, wenn es im Zahnkranz 25 der hier nicht dargestellten Brennkraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. An die Stelle der Polschuhe 31 und der Erregerwicklung 34 kann auch eine permanentmagnetische Erregung der Maschine treten. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem vom Andrehritzel 22 abgewandten Ende der Antriebswelle 44 ist des Weiteren ein Kommutator 52 angebracht, der u.a. aus einzelnen Kommutatorlamellen 55 aufgebaut ist. Die

Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem Einspurrelais 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatordeckel 70 wiederum wird mittels Zuganker 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polrohr 28 am Antriebslagerschild 19 ab, und der Kommutatorlagerdeckel 70 am Polrohr 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlager 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Anstelle eines Planetengetriebes kann jedoch auch ein Direktantrieb zum Zahnkranz 25 realisiert werden.

Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist, ab. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer sogenannten Geradverzahnung 125 (Innenverzahnung), die Teil einer sogenannten Wellen-Nabe-Verbindung ist. Diese Welle-Nabe-Verbindung 128 ermöglicht in diesem Fall das axial geradlinige Gleiten eines Mitnehmers 131. Dieser Mitnehmer 131 ist ein hülsenartiger Fortsatz, der einstückig mit einem topfförmigen Außenring 132 des Freilaufs 137 ist. Dieser Freilauf 137 (Richtgesperre) besteht des Weiteren aus dem Innenring 140, der radial innerhalb des Außenrings 132 angeordnet ist. Zwischen dem Innenring 140 und dem Außenring 132 sind Klemmkörper 138 angeordnet. Diese Klemmkörper 138 verhindern in Zusammenwirkung mit dem Innen- und dem Außenring eine Relativdrehung zwischen dem Außenring und dem Innenring in einer zweiten Richtung. Mit anderen Worten: Der Freilauf 137 ermöglicht eine Relativbewegung zwischen Innenring 140 und Außenring 132 nur in eine Richtung. In diesem Ausführungsbeispiel ist der Innenring 140 einstückig mit dem Andrehritzel 22 und dessen Verzahnung 143 (z.B. Außenschrägverzahnung) ausgeführt. Der Vollständigkeit halber sei hier noch auf den Einspurmechanismus eingegangen. Das Eindrückrelais 16 weist einen Bolzen 150 auf, der ein elektrischer Kontakt ist und der an den Pluspol einer elektrischen Starterbatterie, die hier nicht dargestellt ist, angeschlossen ist. Dieser Bolzen 150 ist durch einen Relaisdeckel 153 hindurchgeführt. Dieser Relaisdeckel 153 schließt ein Relaisgehäuse 156 ab, das mittels mehrerer Befestigungselemente 159 (Schrauben) am Antriebslagerschild 19 befestigt ist. Im Einrückrelais 16 ist weiterhin eine Einzugswicklung 162 und eine sogenannte Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, so dass eine am Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat aber darüber hinaus auch die Aufgabe, mit einem Zugelement 187 einen dem Antriebslagerschild 19 drehbeweglich angeordneten Hebel zu bewegen. Dieser Hebel 190, üblicherweise als Gabelhebel ausgeführt, umgreift mit zwei hier nicht dargestellten "Zinken" an ihrem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in dem Zahnkranz 25 einzuspuren.

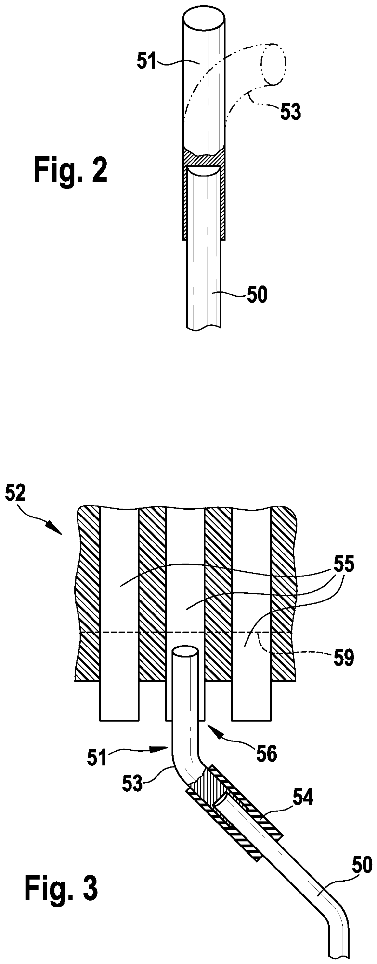

Figur 2 zeigt in vereinfachter Darstellung die Verbindungsstelle zwischen dem Ende eines Aluminiumleiters 50 der Ankerwicklung 49 und einer zur Anschlussstelle hin geschlossenen Kontakthülse 51 aus Kupfer, welche dann mit einem anderen stromführenden Kupferteil der Maschine elektrisch und mechanisch verbunden wird. Das Ende des Ankerleiters 50 ist in die Kontakthülse 51 eingesteckt und mit dieser elektrisch und mechanisch fest verbunden. Die lichte Weite der Kontakthülse 51 oder einer entsprechend gestalteten Kappe ist dabei so bemessen, dass sie ohne Spiel auf den Ankerleiter 50 aufsteckbar ist und dann durch Schweißen oder durch eine Crimpverbindung an diesem befestigt wird. Die Kontakthülse 51 ist derart gestaltet, dass nur der den Ankerleiter 50 überlappende Teil hülsen-oder kappenförmig ausgebildet und der Rest als massiver oder abgedichteter Leitungsabschnitt aus Kupfer ausgeführt ist, so dass vom Ende her keine Feuchtigkeit oder andere Partikel zur Verbindungsstelle hin eindringen können. Die Länge der Kontakthülse 51 ist so bemessen, dass einerseits eine für den Anschluss in der Maschine erforderliche Biegung 53 und andererseits der Schweißbereich, beispielsweise am Kommutator 52 der Maschine, außerhalb des Verbindungsbereichs der Kontakthülse 51 mit dem Ankerleiter 50 liegen. Die Verbindung in der Maschine stellt dann eine reine Kupfer-Kupfer-Verbindung dar und ist korrosionsmäßig unproblematisch. Schutzmaßnahmen an der Verbindungsstelle zwischen Kupfer und Aluminium beeinträchtigen die elektrische und mechanische Kontaktierung des freien Endes des durch die Kontakthülse 51 gebildeten Leitungsabschnittes aus Kupfer nicht.

Figur 3 zeigt ebenfalls in schematisierter Darstellung den erfindungsgemäßen Anschluss eines Ankerleiters 50 aus Aluminium an eine Lamelle 55 des Kommutators 52 einer elektrischen Maschine. Der Schutz der Verbindungsstelle zwischen dem Ankerleiter 50 aus Aluminium und der Kontakthülse 51 aus Kupfer ist durch eine Ummantelung 54 gebildet, welche vorzugsweise aus einer Isolierstoffhülse aus temperaturbeständigem Schrumpfschlauch besteht. Die Verbindungsstelle und die Ummantelung 54 sind ausreichend weit von der Schweißstelle 56 am Ende der Kommutatorlamelle 55 entfernt, um den notwendigen Freiraum für die Schweißverbindung und erforderliche Biegungen 53 zum Heranführen des Ankerleiters 50 an den Kommutator 52 im Bereich der Kontakthülse 51 sicher zu stellen.

Durch die getroffenen Maßnahmen wird erreicht, dass die Kontaktstelle zwischen den Materialien Kupfer und Aluminium von der korrosionsmäßig kritischen Verbindungsstelle 56 weg und hin zu einem unproblematischen Bereich verlegt wird, an dem ohne Schwierigkeiten Korrosionsschutzmaßnahmen durchgeführt werden können.
Die Erfindung ist nicht auf das dargestellte Ausführungsbeispiel beschränkt. Zu den variablen Gestaltungsmaßnahmen gehören insbesondere die Form und die Länge des Leitungsabschnitts 51 aus Kupfer zwischen dem Aluminiumleiter 50 und der Anschlussfahne einer Kommutatorlamelle 55 unterhalb der Trennungslinie 59 zum Auflagebereich der Bürsten, sowie die verschiedenen, grundsätzlich bekannten Verbindungstechniken zwischen einem Leiter 50 von Aluminiumwicklungen 34 und einem Maschinenteil aus Kupfer, wofür neben den verschiedenen Schweißtechniken auch Lötverfahren oder Quetschverbindungen verwendet werden können. Wesentlich ist, dass die Verbindungsstelle 56 zwischen Kupfer- und Aluminiummaterial derart freiliegt, dass sie in geeigneter Weise gegen Korrosion geschützt werden kann.

## Patentansprüche

1. Elektrische Maschine, insbesondere Starter (10) für die Brennkraftmaschine eines Kraftfahrzeuges, mit einem Stator (28, 31, 34) und mit einem Rotor (37), wobei die Rotorwicklung (49) Leiter (50) aus Aluminium aufweist, welche an einer Verbindungsstelle mit Kommutatorlamellen (55) als stromführenden Maschinenteilen aus Kupfer angeschlossen sind, wobei die Enden der Aluminiumleiter (50) jeweils mit einem Leitungsabschnitt (51) aus Kupfer abgeschlossen und diese Abschnitte mit dem anderen stromführenden Teil der Maschine elektrisch und mechanisch verbunden sind, **dadurch gekennzeichnet, dass** eine Verbindung der Leitungsabschnitte (50, 51) aus Aluminium und Kupfer durch eine elektrisch isolierende Ummantelung (54) gegen Korrosion geschützt ist, wobei die Ummantelung (54) aus einer Isolierstoffhülse (54) aus temperaturbeständigem Schrumpfschlauch besteht.

2. Elektrisch Maschine nach Anspruch 1, **dadurch gekennzeichnet, dass** der Leitungsabschnitt aus Kupfer als Kontakthülse oder Kappe (51) ausgebildet ist.

3. Elektrische Maschine nach Anspruch 1 oder 2, **dadurch gekennzeichnet, dass** die abisolierten Enden einer Aluminium-Rotorwicklung (49) mittels einer Kontakthülse oder Kappe (51) aus Kupfer mit den Lamellen (55) eines Kommutators (52) der Maschine verbunden sind.

4. Elektrische Maschine nach einem der vorhergehenden Ansprüche, **dadurch gekennzeichnet, dass** die Enden der Aluminium-Leiter (50) mit den Leitungsabschnitten (51) aus Kupfer durch Schweißen verbunden sind.

5. Elektrische Maschine nach einem der Ansprüche 1 bis 3, **dadurch gekennzeichnet, dass** die Enden der Aluminium-Leiter (50) mit den Leiterabschnitten (51) aus Kupfer durch eine Crimpverbindung verbunden sind.

## Claims

1. Electrical machine, in particular starter (10) for the internal combustion engine of a motor vehicle, comprising a stator (28, 31, 34) and comprising a rotor (37), wherein the rotor winding (49) has conductors (50) which are composed of aluminium and which are connected at a connection point to commutator laminations (55) as current-carrying machine parts which are composed of copper, wherein the ends of the aluminium conductors (50) are each terminated with a line section (51) which is composed of copper, and these sections are electrically and mechanically connected to the other current-carrying part of the machine, **characterized in that** a connection of the line sections (50, 51) which are composed of aluminium and copper is protected against corrosion by an electrically insulating sheathing (54), wherein the sheathing (54) consists of an insulating-material sleeve (54) which is composed of temperature-resistant shrink tubing.

2. Electrical machine according to Claim 1, **characterized in that** the line section which is composed of copper is in the form of a contact sleeve or cap (51).

3. Electrical machine according to Claim 1 or 2, **characterized in that** the ends of an aluminium rotor winding (49), which ends are stripped of insulation, are connected to the laminations (55) of a commutator (52) of the machine by means of a contact sleeve or cap (51) which is composed of copper.

4. Electrical machine according to one of the preceding claims, **characterized in that** the ends of the aluminium conductors (50) are connected by welding to the line sections (51) which are composed of copper.

5. Electrical machine according to one of Claims 1 to 3, **characterized in that** the ends of the aluminium conductors (50) are connected by a crimp connection to the conductor sections (51) which are composed of copper.

## Revendications

1. Machine électrique, notamment démarreur (10), destinée au moteur à combustion interne d'un véhicule automobile, comportant un stator (28, 31, 34) et un rotor (37), dans lequel l'enroulement de rotor (49) comporte des conducteurs (50) constitués d'aluminium qui sont raccordés en un point de connexion à des lamelles de commutateur (55) sous la forme de parties de machine d'acheminement de courant constituées de cuivre, dans lequel les extrémités des conducteurs en aluminium (50) sont respectivement terminées par une section de ligne (51) constituée de cuivre et ces sections sont reliées électriquement et mécaniquement à l'autre partie d'acheminement de courant de la machine, **caractérisée en ce qu'**une liaison des sections de ligne (50, 51) constituées d'aluminium et de cuivre est protégée contre la corrosion par une gaine (54) électriquement isolante, dans lequel la gaine (54) est constituée d'un manchon de matériau isolant (54) constitué d'une gaine rétrécissable résistante à la température.

2. Machine électrique selon la revendication 1, **caractérisée en ce que** la section de ligne constituée de cuivre est réalisée sous la forme d'une douille de contact ou d'un capuchon (51).

3. Machine électrique selon la revendication 1 ou 2, **caractérisée en ce que** les extrémités isolées d'un enroulement de rotor en aluminium (49) sont reliées aux lamelles (55) d'un commutateur (52) de la machine au moyen d'une douille de contact ou d'un capuchon (51) constitué de cuivre.

4. Machine électrique selon l'une quelconque des revendications précédentes, **caractérisée en ce que** les extrémités des conducteurs en aluminium (50) sont reliées aux sections de ligne (51) constituées de cuivre par soudage.

5. Machine électrique selon l'une quelconque des revendications 1 à 3, **caractérisée en ce que** les extrémités des conducteurs en aluminium (50) sont reliées aux sections de conducteur (51) constituées de cuivre par une connexion sertie.
